# EUROPEAN PATENT APPLICATION

(11) **EP 3 900 870 A1**
(43) Date of publication of application: **27.10.2021**
(21) Application number: 19897615.1
(22) Date of filing: 03.12.2019
(51) Int. Cl.: B23K 31/00, B23K 9/12, G01B 11/24

(54) **VISUAL INSPECTION DEVICE, METHOD FOR IMPROVING ACCURACY OF DETERMINATION FOR EXISTENCE/NONEXISTENCE OF SHAPE FAILURE OF WELDING PORTION AND KIND THEREOF USING SAME, WELDING SYSTEM, AND WORK WELDING METHOD USING SAME**

(30) Priority: 19.12.2018 JP 2018237516; 19.12.2018 JP 2018237521
(71) Applicant: Panasonic Intellectual Property Management Co., Ltd., Osaka-shi, Osaka 540-6207 (JP)
(72) Inventor: YOSHIDA Masashi, Osaka-shi, Osaka 540-6207 (JP); SAKAI Toru, Osaka-shi, Osaka 540-6207 (JP); ATSUTA Narumi, Osaka-shi, Osaka 540-6207 (JP); SAKURAI Michio, Osaka-shi, Osaka 540-6207 (JP)
(74) Representative: Vigand, Philippe
(86) International application number: PCT/JP2019/047218
(87) International publication number: WO 2020/129617

(57) **Abstract**

An appearance inspection apparatus 20 includes: an image processor 23 that generates image data of a weld 201 based on data of a shape measured by a shape measurement unit 21; a learning data set generator 25 that classifies the multiple pieces of image data generated by the image processor 23 by material and shape of the workpiece 200, and performs data extension processing to generate a plurality of learning data sets; a determination model generator 26 that generates a determination model for the shape of the weld 201 for each of the material and shape of the workpiece 200 using the plurality of learning data sets; and a first determination unit 27 that determines whether the shape of the weld 201 is good or bad based on the image data read from the image processor 23 and the determination model.

## Description

### TECHNICAL FIELD

The present invention relates to an appearance inspection apparatus, a method for improving accuracy of determination of the presence or absence and type of a shape defect of a weld using the appearance inspection apparatus, a welding system, and a method for welding a workpiece using the welding system.

### BACKGROUND ART

The shape of a weld has often been visually inspected by an operator, and the number of man-hours for the inspection has been a problem. The inspection result varies depending on the operator in charge of the inspection, and predetermined weld quality could not be guaranteed in some cases.

Under these circumstances, a technique of inspecting the shape of the weld using an appearance inspection apparatus having a shape measurement sensor has been proposed. For example, according to a method disclosed in Patent Document 1, slit light from a laser light source is projected to scan a weld of a workpiece, and an image of an obtained shape line is captured by a measurement camera. Based on the captured image, a three-dimensional shape of the weld is acquired as point group data, and a desired cross-sectional shape of the weld is obtained from the point group data.

### CITATION LIST

### PATENT DOCUMENT

[Patent Document 1] Japanese Unexamined Patent Publication No. 2012-037487

### SUMMARY OF THE INVENTION

### TECHNICAL PROBLEM

Whether the shape of the weld is good or bad is determined according to a preset criterion.

However, the criterion needs to be set for each of different types of welds, and also for each of different shape inspection items. This complicates the setting of the criterion, increasing the number of man-hours. In addition, there are multiple modes of a shape defect of the weld, and not only the presence or absence of the shape defect, but also the position and size of the defect in the weld need to be determined according to the criterion in the welding process. Thus, a lot of man-hours has been required for the determination of shape quality. Such determination requires acquisition of a large number of boundary samples, which requires a very large number of man-hours.

However, no measure for solving such problems has been disclosed in Patent Document 1.

The present invention has been made in view of the foregoing background, and an object of the present invention is to provide an appearance inspection apparatus capable of accurately determining whether the shape of a weld is good or bad with a small number of man-hours, a method for improving accuracy of determination of the presence or absence and type of a shape defect of the weld using the appearance inspection apparatus, a welding system, and a method for welding a workpiece using the welding system.

### SOLUTION TO THE PROBLEM

In order to achieve the object, the present invention is directed to an appearance inspection apparatus for inspecting an appearance of a weld of a workpiece. The appearance inspection apparatus includes: a shape measurement unit that measures a shape of the weld; an image processor that generates image data of the weld based on data of the shape measured by the shape measurement unit; a learning data set generator that classifies the multiple pieces of image data generated by the image processor by material and shape of the workpiece, and performs data extension processing on the classified image data to generate a plurality of learning data sets; a determination model generator that generates a determination models for determining whether the shape of the weld is good or bad for each of the material and shape of the workpiece using the plurality of learning data sets; and a first determination unit that determines whether the shape of the weld is good or bad based on the image data read from the image processor and the one or more determination models generated by the determination model generator.

According to this configuration, a required amount of learning data sets can be generated based on a small amount of image data, and the determination model can be provided with enhanced accuracy. Thus, whether the shape of the weld is good or bad can be accurately determined. Further, it is no longer necessary to acquire a large amount of image data for learning, and the number of man-hours required for determining whether the shape is good or bad can be significantly reduced.

The present invention is also directed to a method for improving accuracy of determination of presence or absence and type of a shape defect of a weld using the appearance inspection apparatus. The method at least includes: an appearance inspection step of inspecting the appearance of the weld of the workpiece; a shape defect determination step of determining the presence or absence and type of the shape defect of the weld based on a result of the inspection in the appearance inspection step; a visual check step of checking the weld with human eyes; and a correctness determination step of determining whether a result of the determination in the shape defect determination step is correct or not through comparison between the result of the checking in the visual check step and the result of the determination in the shape defect determination step. If the result of the determination in the correctness determination step is negative, a series of steps including: an annotation step of tagging the presence or absence and type of the shape defect specified in the visual check step on image data of the weld; a learning data set generating step of generating the learning data sets based on the image data of the weld that has gone through the annotation step; a relearning step of allowing the determination model to relearn using the learning data sets generated in the learning data set generating step is performed, and then the shape defect determination step is performed again, and the series of steps is repeated until the result of the determination in the correctness determination step becomes positive.

This method can improve the learning efficiency and accuracy of the determination model. Further, whether the shape of the weld is good or bad can be determined by the first determination unit of the appearance inspection apparatus with enhanced accuracy, and the yield of welding of the workpiece can be properly evaluated.

The present invention is also directed to a welding system including: a welding apparatus that welds a workpiece; and the appearance inspection apparatus. The welding apparatus at least includes: a welding head that applies heat to the workpiece; and an output controller that controls a welding output of the welding head.

According to this configuration, the shape of the weld can be inspected with high accuracy and a small number of man-hours, and the cost of the welding process can be reduced.

The present invention is also directed to a method for welding a workpiece. The method includes: a welding step of welding a predetermined portion of the workpiece using the welding apparatus; a shape determination step of determining whether the shape of the weld of the workpiece is good or bad using the appearance inspection apparatus after the end of the welding step; and a reweld/no-reweld determination step of determining whether the shape defect of the weld is repairable through rewelding or not based on the result of the determination in the shape determination step. If the result of the determination in the shape determination step is positive, welding of a different portion of the workpiece starts, or welding of a next workpiece starts. If the result of the determination in the shape determination step is negative, the reweld/no-reweld determination step is performed. If the result of the determination in the reweld/no-reweld determination step is positive, the shape defect is rewelded according to the rewelding condition set by the output controller.

According to this method, whether the shape of the weld is good or bad and whether the shape defect is repairable through rewelding or not are determined, and the weld is rewelded according to the rewelding condition based on the results of the determinations. This can reduce poor welding of the workpiece, and can improve the weld quality.

### ADVANTAGES OF THE INVENTION

The appearance inspection apparatus of the present invention can determine whether the shape of the weld is good or bad with high accuracy based on a small amount of image data. The method for improving the accuracy of determination of the presence or absence and type of the shape defect of the weld of the present invention can improve the learning efficiency and accuracy of the determination model. Further, the method can improve the accuracy of the determination of whether the shape of the weld is good or bad by the appearance inspection apparatus. The welding system of the present invention can inspect the shape of the weld with high accuracy and a small number of man-hours, and can reduce the cost of the welding process. The method for welding the workpiece of the present invention can reduce poor welding of the workpiece, and can improve the weld quality.

### BRIEF DESCRIPTION OF THE DRAWINGS

FIG. 1 is a schematic view illustrating a configuration of a welding system according to a first embodiment of the present invention.
FIG. 2 is a functional block diagram of an appearance inspection apparatus.
FIG. 3A is a schematic plan view illustrating an example of defect modes of a weld.
FIG. 3B is a schematic cross-sectional view taken along line IIIB-IIIB in FIG. 3A.
FIG. 3C is a schematic cross-sectional view taken along line IIIC-IIIC in FIG. 3A.
FIG. 3D is a schematic cross-sectional view taken along line IIID-IIID in FIG. 3A.
FIG. 3E is a schematic cross-sectional view taken along line IIIE-IIIE in FIG. 3A.
FIG. 4A is a schematic view illustrating an example of a procedure for generating a learning data set.
FIG. 4B is a schematic view illustrating another example of the procedure for generating the learning data set.
FIG. 4C is a schematic view illustrating still another example of the procedure for generating the learning data set.
FIG. 5 is a flowchart showing an operation procedure for improving accuracy of determination of the presence or absence and type of a shape defect.
FIG. 6 is a schematic view illustrating an example of a procedure for generating a learning data set related to a starting end portion of a weld bead.
FIG. 7 is a functional block diagram of an appearance inspection apparatus according to a second embodiment of the present invention.
FIG. 8 is a functional block diagram of an output controller of a welding apparatus.
FIG. 9 is a flowchart showing a procedure for welding a workpiece.
FIG. 10 is a functional block diagram of an output controller of a welding apparatus according to a third embodiment of the present invention.
FIG. 11 is a schematic diagram illustrating a configuration of another welding system.

### DESCRIPTION OF EMBODIMENTS

Embodiments of the present invention will be described in detail with reference to the drawings. The following description of advantageous embodiments is a mere example in nature, and is not at all intended to limit the scope, applications, or use of the present invention.

### (Embodiments)

### [Configuration of Welding System]

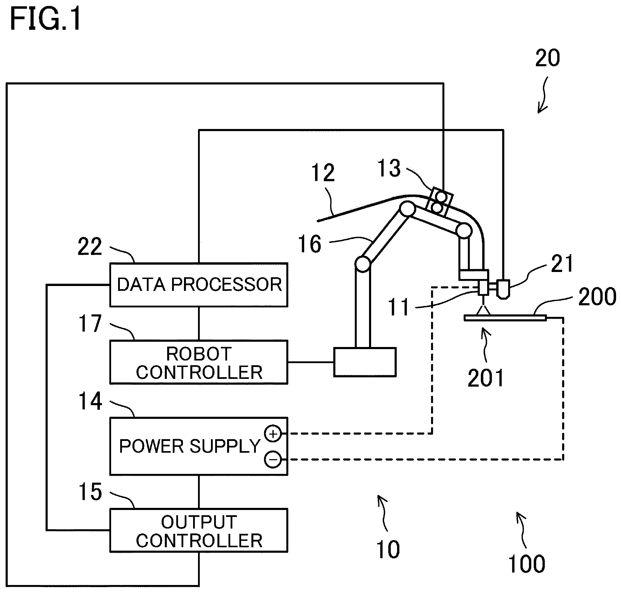

FIG. 1 is a schematic diagram illustrating a configuration of a welding system according to the present embodiment. A welding system 100 includes a welding apparatus 10 and an appearance inspection apparatus 20.

The welding apparatus 10 includes a welding torch 11, a wire feeder 13, a power supply 14, an output controller 15, a robot arm 16, and a robot controller 17. When electric power is supplied from the power supply 14 to a welding wire 12 held by the welding torch 11, arc is generated between the tip of the welding wire 12 and a workpiece 200, and heat is applied to the workpiece 200, thereby performing arc welding. Although the welding apparatus 10 includes other components and facilities such as a pipe and a gas cylinder for supplying shielding gas to the welding torch 11, such components are not illustrated and described for convenience of explanation.

The output controller 15 is connected to the power supply 14 and the wire feeder 13, and controls a welding output of the welding torch 11, i.e., the electric power supplied to the welding wire 12 and power supply time, according to predetermined welding conditions. Further, the output controller 15 controls the feeding speed and amount of the welding wire 12 fed from the wire feeder 13 to the welding torch 11. The welding conditions may be directly input to the output controller 15 via an input unit (not shown), or may be selected from a welding program read from a recording medium or the like.

The robot arm 16, which is a known articulated robot, holds the welding torch 11 at the tip, and is connected to the robot controller 17. The robot controller 17 controls the operation of the robot arm 16 so that the tip of the welding torch 11, i.e., the tip of the welding wire 12 held by the welding torch 11, moves to a desired position while drawing a predetermined welding trajectory.

The appearance inspection apparatus 20 includes a shape measurement unit 21 and a data processor 22. The shape measurement unit 21 is attached to the robot arm 16 or the welding torch 11 to measure the shape of a weld 201 of the workpiece 200. The configuration of the appearance inspection apparatus 20 will be described in detail later.

FIG. 1 illustrates an arc welding apparatus as the welding apparatus 10, but the welding apparatus 10 is not particularly limited thereto. For example, the welding apparatus 10 may be a laser welding apparatus. In this case, in place of the welding torch 11, a laser head (not shown) connected to a laser oscillator (not shown) via an optical fiber (not shown) is attached to and held by the robot arm 16. In the following description, the welding torch 11 and the laser head may be collectively referred to as a welding head 11.

### [Configuration of Appearance Inspection Apparatus]

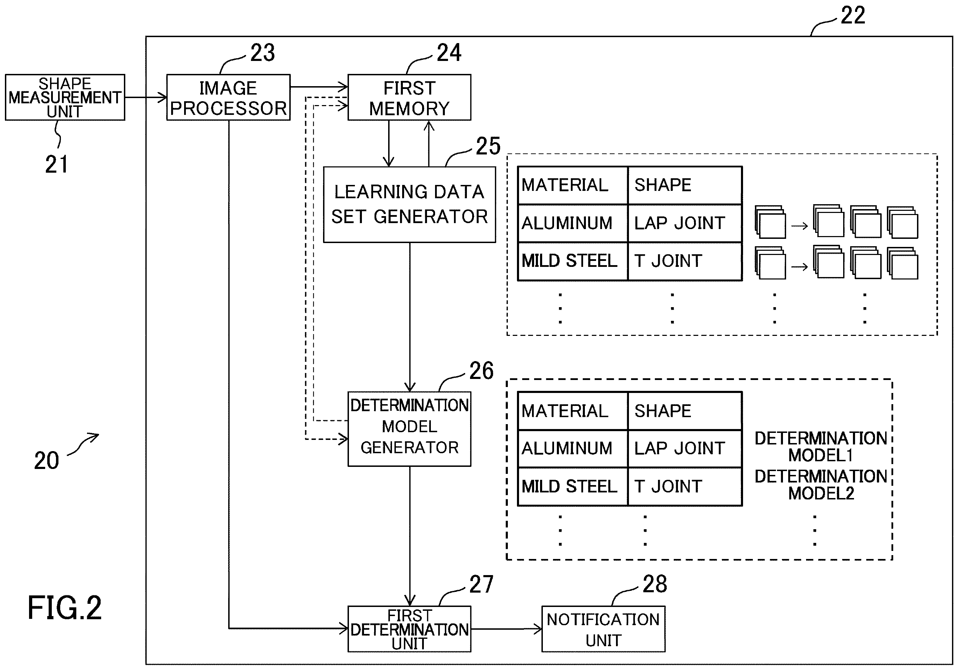

FIG. 2 is a functional block diagram of the appearance inspection apparatus. The data processor 22 includes a plurality of functional blocks, namely, an image processor 23, a first memory 24, a learning data set generator 25, a determination model generator 26, a first determination unit 27, and a notification unit 28. The data processor 22 is generally configured as a personal computer, and executes software implemented on a central processing unit (CPU) or a graphics processing unit (GPU) to realize the plurality of functional blocks in the data processor 22.

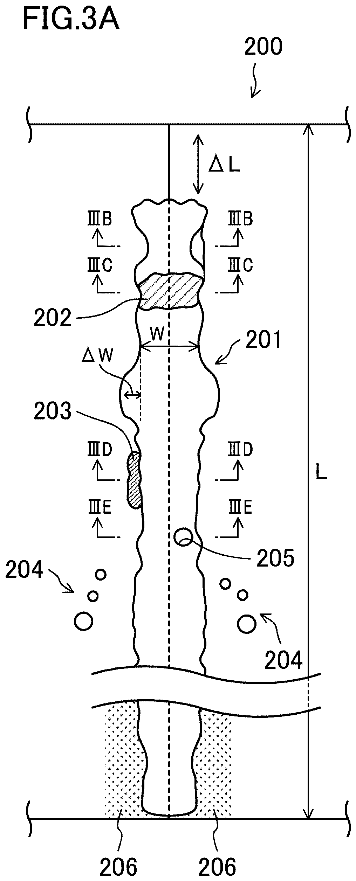

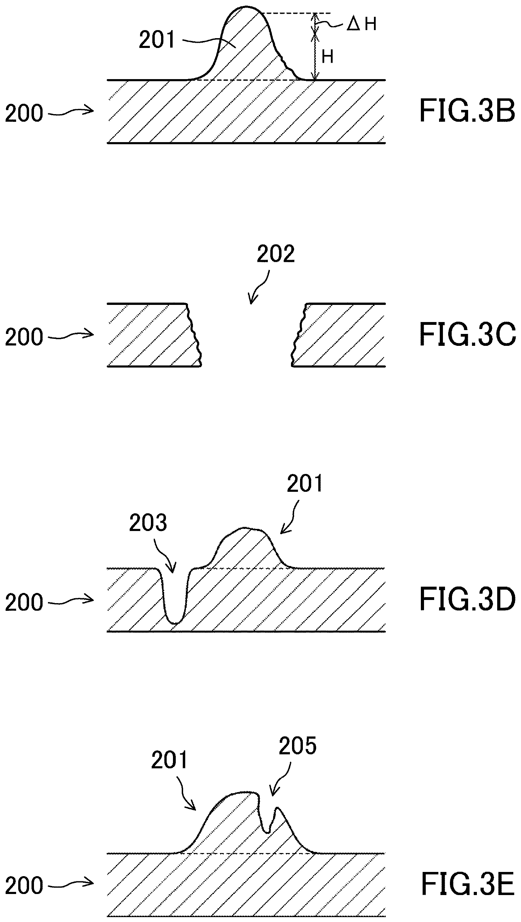

The shape measurement unit 21 has a known configuration, and is, for example, a three-dimensional shape measurement sensor including a laser light source (not shown) capable of scanning the surface of the workpiece 200, and a camera (not shown) that captures an image of a reflection trajectory (will be hereinafter referred to as a shape line) of laser light projected onto the surface of the workpiece 200. The shape measurement unit 21 scans the whole weld 201 of the workpiece 200 with the laser light, and captures an image of the laser light reflected from the weld 201 with the camera, thereby measuring the shape of the weld 201. The shape measurement unit 21 is configured to measure the shape of not only the weld 201, but also the surroundings thereof within a predetermined range. This is for determining the presence or absence of spatters 204 and smuts 206 described later (see FIG. 3A). The camera has a CCD or CMOS image sensor as an imaging device. The shape measurement unit 21 is not particularly limited to have the above-described configuration, and may be configured in a different manner. For example, the camera may be replaced with an optical interferometer.

The image processor 23 receives the shape data acquired by the shape measurement unit 21, and converts the shape data into image data. For example, the image processor 23 acquires point group data of the shape line captured by the shape measurement unit 21. Further, the image processor 23 corrects the inclination and distortion of a base portion of the weld 201 with respect to a predetermined reference plane, e.g., a surface on which the workpiece 200 is placed, by statistical processing of the point group data, and generates the image data about the shape of the weld 201. In addition, the image processor 23 may perform, for example, edge enhancement correction by enhancing the periphery of the weld 201 to emphasize the shape and position of the weld 201.

The image processor 23 extracts feature values of the image data in accordance with the shape of the workpiece 200 or inspection items for the shape of the weld 201. In this case, one or more feature values corresponding to one or more inspection items are extracted from a piece of image data. The extracted feature values are associated with the image data for use in subsequent data processing. The feature values are particular specifications extracted from the image data. Typical examples thereof include a length, width, and height from a reference plane of the weld 201, and a difference in length, width, and height between a plurality of points in the weld 201. However, the feature values are not particularly limited to such examples, and are appropriately set according to the details to be evaluated by the inspection items.

The image processor 23 has the function of removing noise from the data acquired by the shape measurement unit 21. A reflection factor of the laser light emitted from the shape measurement unit 21 varies depending on the material of the workpiece 200. Thus, if the reflection factor is too high, halation or the like occurs to cause noise, and the image data such as the point group data cannot be properly generated in some cases. For this reason, the image processor 23 is configured to perform noise filtering processing on software. The noise can also be removed by providing the shape measurement unit 21 itself with an optical filter (not shown). Combined use of the optical filter and the filtering processing on the software can provide high quality image data. This can improve the quality of a determination model of a learning data set to be described later, and whether the shape of the weld 201 is good or bad can be determined with high accuracy.

The first memory 24 stores image data of welds 201 of different workpieces 200 processed before welding the workpiece 200 to be evaluated. The first memory 24 also stores sample image data experimentally acquired before actual welding of the workpiece 200. The sample image data includes non-defective data about a good shape of the weld 201 to be evaluated, and defective data about a shape with some defects. Needless to say, the image data of the weld 201 of the different workpiece 200 and the image data of the weld 201 of the workpiece 200 to be evaluated are acquired from similar welds 201 of the workpieces 200 having the same shape and being made of the same material.

The learning data set generator 25 reads the image data generated by the image processor 23 and stored in the first memory 24, and classifies the data by material and shape of the workpiece 200. The image data may be classified by inspection item of the weld 201. In this case, the same image data may be contained in different inspection items. The learning data set generator 25 generates a learning data set for each material and shape of the workpiece 200 based on the feature value associated with the image data, i.e., generates a group of learning data which is input to a determination model described later and improves determination accuracy of the determination model. For example, the materials and shapes of the workpiece 200 are sorted into a matrix to determine classification categories, and the learning data sets are classified in correspondence with the categories (see FIG. 2). Examples of the shapes of the workpiece 200 include a butt-shaped butt joint with butted plates against each other, a lap-shaped lap joint with stacked plates, a T joint, and a cruciform joint.

The learning data set generator 25 performs data extension processing on the image data read from the first memory 24 to generate the learning data set. Specifically, the data extension processing is performed through changing one or more feature values associated with the image data and/or changing the position of the shape defect in the image data of the weld 201. A procedure for generating the learning data set will be described in detail later.

Regarding the inspection items of the weld 201 set for each material and shape of the workpiece 200, the determination model generator 26 generates a determination model based on a criterion set for each inspection item. The generated determination model is represented as, for example, a combination of two or more discriminators each of which is weighed. The determination model is represented, for example, by a convolutional neural network (CNN).

The determination model generator 26 inputs, among the plurality of learning data sets, a learning data set corresponding to each material and shape of the workpiece 200 to each of the determination models generated for each material and shape of the workpiece 200, and repeats learning, thereby improving the determination accuracy of each of the determination models. In this case, the determination models are generated according to the classification categories shown in FIG. 2. The learning is repeated until the accuracy rate, recall rate, and precision of the determination model satisfy preset values.

For the generation of the determination model, the non-defective data and the-defective data in the sample image data are appropriately selected and used according to the material and shape of the workpiece 200. This can shorten time required to generate the determination model, and can provide the determination model with high accuracy. Likewise, for the generation of the determination model for each inspection item of the weld 201, the non-defective data and the defective data in the sample image data are appropriately selected and used according to the inspection items. This can shorten the time required to generate the determination model, and can provide the determination model with high accuracy.

The first determination unit 27 determines whether the shape of the weld 201 is good or bad, i.e., whether the shape satisfies a predetermined criterion, based on the image data of the weld 201 generated by the image processor 23 and the determination model which is one of the determination models generated by the determination model generator 26 and corresponds to the selected inspection item.

However, as will be described later, there are a wide variety of shape defect modes. Therefore, in practice, the shape defect mode of an abnormal shape portion included in the image data is calculated in terms of probability. If the probability is equal to or more than a predetermined value, the portion is determined to have a shape defect. For example, when the image data is determined to contain a shape defect, the probability that the type of the shape defect is spatters 204 (see FIG. 3A), which is calculated in consideration of, e.g., the shape, size, and/or position of the portion, is shown on a display unit (not shown). If the probability is 70% or more, the shape defect is determined to be the spatters 204. A threshold value for the determination and a display format can be arbitrarily set. For example, the shape defect may be displayed in red if recognized as the spatters 204, or in yellow if recognized as a hole 202 (see FIG. 3A). If the presence or absence and upper limit number of the spatters 204 are set as the inspection items, a portion recognized as the spatters 204 may be displayed in a color different from its background, and the probability that the portion is the spatters 204 may be classified by color. For example, the probability of 30% or less may be colored in green, and the probability of 70% or more may be colored in red. Needless to say, this classification of the probability ranges by color and the definition of the colors can be arbitrarily set. If the size of the spatters 204 is also included in the criterion for determining whether the shape is good or bad, it goes without saying that the size of the spatters 204 calculated based on the image data is compared with the criterion to determine whether the shape is good or bad.

Since there are various inspection items for the shape of the weld 201, determination of whether the shape is good or bad is performed for each inspection item, and final quality determination is performed only when the shape has passed all the inspection items for which the determination is necessary.

The notification unit 28 is configured to notify the output controller 15, the robot controller 17, a welder, or a system administrator of the result of the determination by the first determination unit 27. For the notification, the determination result may be shown on a display unit (not shown) of the welding system 100 and/or output from a printer (not shown). If it is enough to simply notify the final determination result, voice notifying the result may be output from a voice output unit which is not shown. In a preferred embodiment, the notification unit 28 notifies not only the final determination result, but also the determination result for each inspection item. By doing so, the welder or the system administrator can specifically know what kind of failure has occurred at the weld 201.

If the result of the determination by the first determination unit 27 is positive, i.e., the shape of the weld 201 is determined to be good, the welding system 100 continuously welds a portion 201 to be welded next of the same workpiece 200, or a similar portion 201 to be welded of a next workpiece 200.

If the result of the determination by the first determination unit 27 is negative, i.e., the shape of the weld 201 is determined to be bad, the output controller 15 stops the welding output of the welding torch 11, and the robot controller 17 stops the operation of the robot arm 16 or operates the robot arm 16 so that the welding torch 11 moves to a predetermined initial position.

### [Procedure for Generating Learning Data Set]

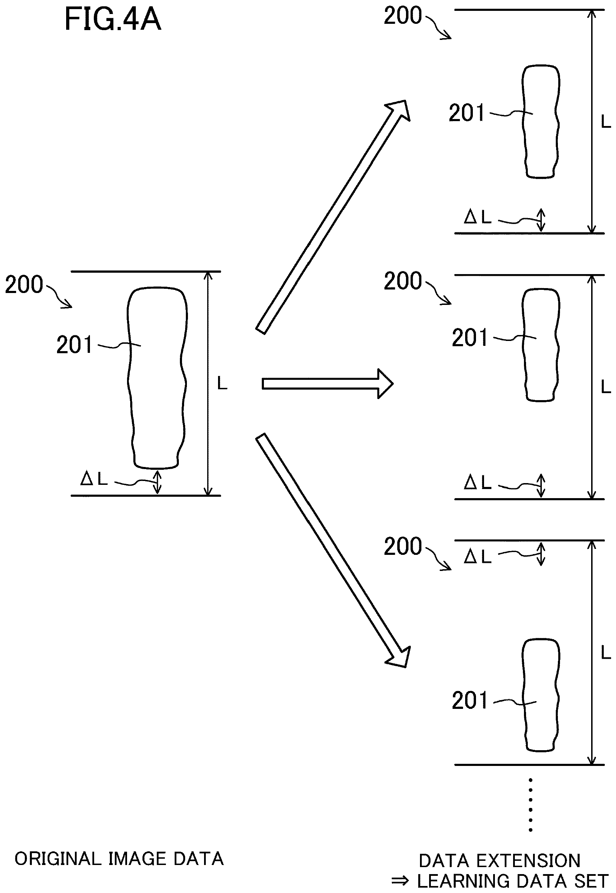

FIGS. 3A to 3E show examples of a shape defect at the weld. FIGS. 4A to 4C show examples of a procedure for generating the learning data set. FIGS. 3A to 3E respectively show the shape of the weld 201 which is butt welded. FIG. 3A shows the shape in plan view, and FIGS. 3B to 3E show the shape in sections taken along lines IIIB-IIIB, IIIC-IIIC, IIID-IIID, and IIIE-IIIE of FIG. 3A, respectively.

As shown in FIGS. 3A to 3E, when arc welding or laser welding is performed on the workpiece 200, the weld 201 may have various kinds of shape defect depending on various factors such as poor setting of the welding conditions and poor quality of the workpiece 200 used. For example, the weld 201 may partially melt off (a through hole formed in the workpiece 200 due to partial melting of the weld 201 off the workpiece 200 may be hereinafter referred to as a hole 202), or an undercut 203 may be formed. The undercut 203 means a defective portion that is formed at an edge of a weld bead and is dented from the surface of the workpiece 200. The length, width, and height from the reference plane of the weld 201 may vary from their design values L, W, and H beyond allowable ranges ΔL, ΔW, and ΔH. Further, when droplets (not shown) generated at the tip of the welding wire 12 move to the workpiece 200, some of the droplets or fine particles of molten metal of the workpiece 200 may be scattered to generate the spatters 204. When the workpiece 200 is a galvanized steel sheet, the sheet may partially evaporate at the weld 201 to leave a pit 205. When the workpiece 200 or the welding wire 12 is made of an aluminum-based material, smut 206 may be generated near the weld 201.

The pit 205 opens at the surface of the weld bead, and the smut 206 is a black soot-like product that adheres to the vicinity of the weld bead. The pit 205 and the smut 206, and the above-described hole 202, undercut 203, and spatter 204 are examples of the modes (types) of the shape defect.

As described above, there are various modes of the shape defect of the weld 201, for each of which the criterion needs to be set, and the inspection needs to be performed in accordance with the criterion. For example, regarding the hole 202 or the undercut 203, the quality determination needs to be performed not only by determining its presence or absence, but also by setting, for example, a contrast ratio to or a height difference from the surroundings of the weld 201, to identify the hole 202 or the undercut 203. Further, regarding the spatters 204, for example, an average diameter thereof needs to be set, and the quality determination needs to be performed in terms of the number of the spatters 204 having an average diameter equal to or greater than a predetermined value per unit area. The number of inspection items and the criterion for determining whether the shape of the weld 201 is good or bad are changed or increased depending on the material and portion to be welded of the workpiece 200, and specifications required by the customer.

Moreover, the criterion for determining the presence or absence of the shape defect from the image data varies depending on the material and shape of the workpiece 200. As described above, the reflection factor of the laser light varies depending on the material of the workpiece 200. Thus, for example, the luminance level and contrast of the image data also vary. In addition, depending on the shape of the workpiece 200, the shape of the bead at the weld 201 may change due to the influence of gravity or the like even when straight portions having the same length are welded.

Thus, the determination model generator 26 needs to generate the determination models using a large amount of learning data for each material and shape of the workpiece 200. That is, a large amount of image data of the weld 201 suitable as the learning data needs to be acquired for each material and shape of the workpiece 200. However, acquiring the image data necessary for each material and shape of the workpiece 200 in advance involves enormous number of man-hours, which is inefficient.

Therefore, according to the present embodiment, the learning data set generator 25 classifies the image data read from the first memory 24 by material and shape of the workpiece 200, and performs data extension processing on each of the classified image data to generate a plurality of learning data sets, i.e., a group of learning data required for the generation of the determination model.

For example, as shown in FIG. 4A, the length and position of the weld 201, which are feature values, in the original image data are varied to generate a plurality of data as the learning data sets. In an example shown in FIG. 4A, multiple pieces of image data are generated in each of which the length of the weld 201 is smaller than the reference value L beyond the allowable range ΔL. However, the image data is not particularly limited thereto, and image data in which the length is greater than the reference value L beyond the allowable range ΔL is also generated.

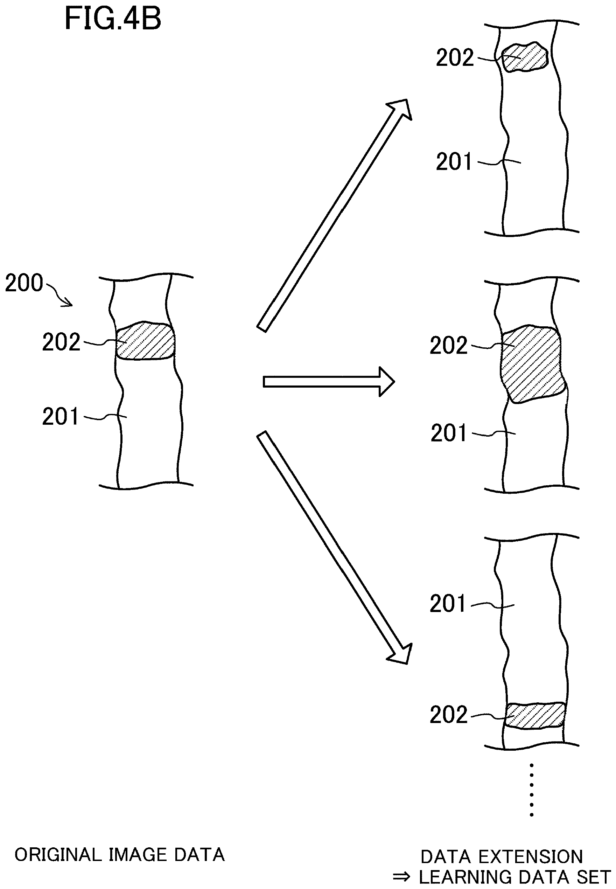

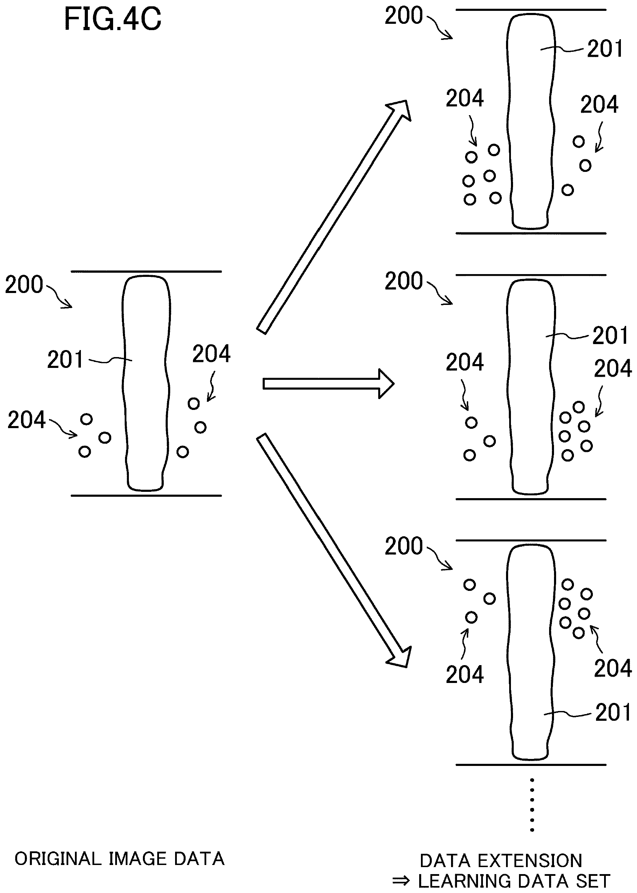

Alternatively, as shown in FIG. 4B, the size and position of the hole 202 in the original image data are varied to generate a plurality of data as the learning data sets. In this case, the height from the reference plane and the difference in height between a plurality of points in the weld 201 are extracted as the feature values, and are varied. In addition, when similar feature values are extracted around the weld 201 and a learning data set is generated based on the feature values, whether the spatters 204 and the smut 206 are present beyond the allowable range can be determined (see FIG. 4C).

Depending on the shape of the workpiece 200, the shape defect may be falsely determined. The laser light emitted from the shape measurement unit 21 usually scans only in a predetermined direction. For this reason, depending on the degree of surface irregularities of the weld 201, the laser light may be blocked or irregularly reflected, which may lower the quality of the image data in part. For example, in the vicinity of a starting end portion and terminal end portion of the weld bead formed at the weld 201, an excess of the bead may cause the laser light to be irregularly reflected. This may result in false determination of the shape defect, particularly the type thereof. In such a case, the measured shape defect is checked again with human eyes to add an annotation, thereby improving the accuracy of determination of whether the shape defect is present or not and the accuracy of determination of the type of the shape defect.

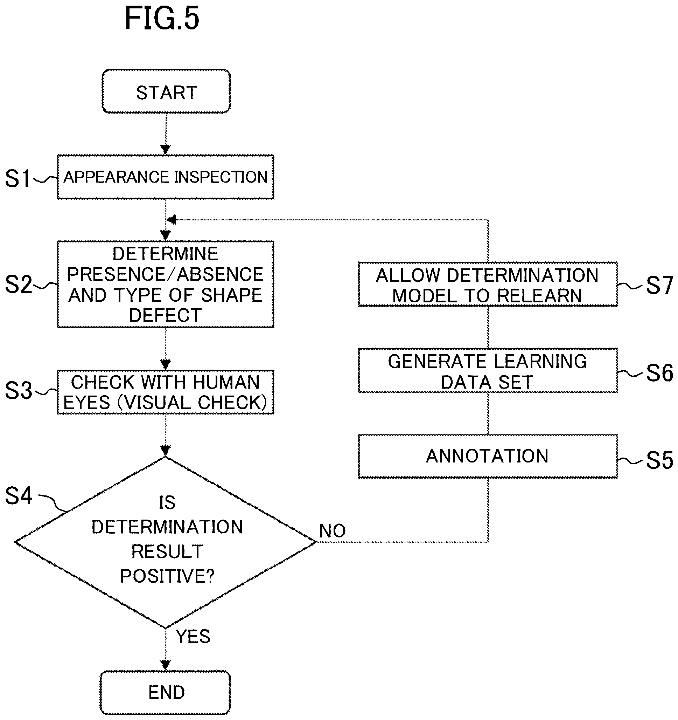

FIG. 5 shows an operation procedure for improving the accuracy of determination of the presence or absence and type of the shape defect.

The shape measurement unit 21 of the appearance inspection apparatus 20 inspects the appearance of the weld 201 of the workpiece 200 (step S1). In this case, the weld 201 may not be of an actual product, and may be of a test workpiece. When the test workpiece is used, two or more test workpieces of different materials and shapes are prepared.

Then, based on the inspection result, the presence or absence of the shape defect in the weld 201 and the type of the shape defect are determined (step S2). Step S2 is performed by the first determination unit 27.

The weld 201 is checked with human eyes (step S4), and the result is compared with the result of the determination in step S2 to determine whether the result of the determination in step S2 is correct or not (step S4). Needless to say, the determination in step S4 is performed by a human.

If the result of the determination in step S4 is positive, it is determined that the determination model has accuracy of a certain level or higher, and the procedure ends.

If the result of the determination in step S4 is negative, the procedure proceeds to step S5 to execute annotation. Here, the annotation refers to a process of tagging the presence or absence and type of the shape defect that are specified through observation of the actual weld 201 with human eyes on a corresponding portion of the image data. Needless to say, the annotation is also performed by a human.

Through step S5, the presence or absence and type of the shape defect in the acquired image data are specified. Based on this result, the learning data set is reviewed, recreated, or newly created (step S6), and relearning of the determination model is executed using the learning data set generated in step S6 (step S7). The learning data set generator 25 generates the learning data set in step S6. The learning data set may be generated using the image data classified by material and shape of the workpiece.

After step S7, the procedure returns to step S2 to determine the presence or absence and type of the shape defect again.

When the routine shown in FIG. 5 is performed appropriate number of times at a suitable frequency as needed, the accuracy of the determination model for determining whether the shape of the weld is good or bad can be improved, thereby improving the accuracy of determination of the presence or absence and type of the shape defect which is important for the quality determination of the shape of the weld. The criterion for the determination in step S4 is determined based on the accuracy rate of the presence or absence and type of the shape defect. Further, the determination model that has relearned in step S7 has a threshold value for determining the presence or absence and type of the shape defect of the weld 201, and the threshold value is changed from that of the determination model before the relearning. The threshold value in this case corresponds to the above-described probability in consideration of the shape, size, and/or position of the shape defect.

If a learned determination model whose accuracy (probability) has been ensured to be equal to or higher than a predetermined level is separately prepared with respect to a workpiece whose material and shape are similar to those of the target workpiece 200, the annotation in step S5 can be performed not by a human, but by the first determination unit 27 using the relearned determination model.

When the learning data set is recreated or newly created in step S6, a learning data set for a particular portion of the weld 201 is created separately from that for other portion, thereby improving the learning efficiency and accuracy of the determination model. In this case, in a preferred embodiment, the particular portion is cut out to separately perform the data extension processing, and the result of the determination using the determination model having improved accuracy is reflected to the processing. In the specification of the present application, the "particular portion of the weld 201" refers to a portion in which the determination of the presence or absence and type of the shape defect is harder than in the other portion of the weld 201, such as the starting end portion and terminal end portion of the weld bead described above.

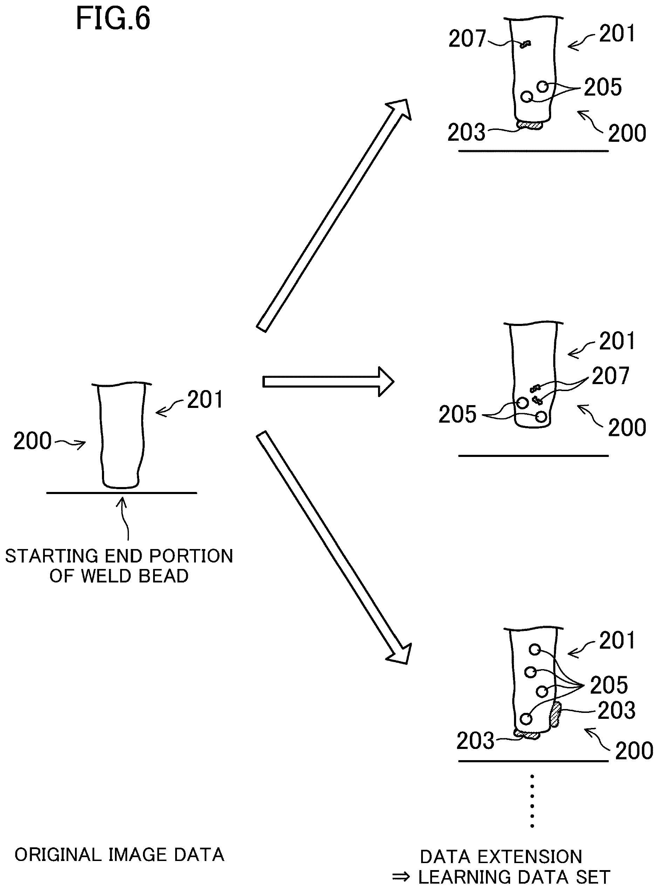

FIG. 6 shows an example of a procedure for generating a learning data set related to the starting end portion of the weld bead. It is needless to say that the same processing is performed for the terminal end portion of the weld bead.

The height from the flat surface of the workpiece 200 sharply changes in the starting end portion and terminal end portion of the weld bead. In particular, it is difficult to distinguish the shape defects involving surface irregularities, such as the pit 205 and the slag 207 that adheres to the surface of the bead weld, and the undercut 203 formed at the boundary between the bead weld and the flat surface. Note that the slag 207 refers to metal dust adhering to the surface in the course of welding.

Therefore, as shown in FIG. 6, for the generation of the learning data, the data of these shape defects are inserted into the starting end portion of the weld bead while changing the number and size thereof. At this time, the data of the shape defect whose type has been determined in the procedure shown in FIG. 5 is used. In addition, for example, data in which brightness of the shape defect or a difference in contrast with the vicinity thereof is varied is also generated and inserted into the image data of the starting end portion.

This can improve the accuracy of determination of the shape quality of the weld 201 to a practical level.

Further, in order to determine whether the shape of a single weld 201 is good or bad, different determination models may be used for the particular portion and the other portion. In this case, a determination model that has learned using a learning data set corresponding to the particular portion and a determination model that has learned using a learning data set corresponding to the other portion are used.

It is needless to say that the learning accuracy and recall rate of the determination model can be improved through executing the operation shown in FIG. 5 even for the particular portion of the weld 201 other than the starting end portion and terminal end portion of the weld bead. At this time, the annotation is also carried out as needed.

The generation of the learning data set is not limited to the above method. Needless to say, the image processor 23 extracts a corresponding feature value from the original image data for each material and shape of the workpiece 200, and the learning data set generator 25 performs the data extension processing based on the feature values to generate the learning data set.

For the generation of the learning data set, only the sample image data described above may be used, or image data separately acquired in the process of welding the workpiece 200 may be used in addition to the sample image data. The learning data set may be generated in any way as long as the learning data set required to obtain a determination model that satisfies desired accuracy is ensured for each material and shape of the workpiece 200.

### [Advantages]

As described above, the appearance inspection apparatus 20 of the present embodiment includes the shape measurement unit 21 that measures the shape of the weld 201 of the workpiece 200, and the data processor 22. The data processor 22 includes: the image processor 23 that generates image data of the weld 201 based on the data of the shape measured by the shape measurement unit 21; and the learning data set generator 25 that classifies the multiple pieces of image data generated by the image processor 23 by material and shape of the workpiece 200, and that performs data extension processing on the classified image data to generate a plurality of learning data sets.

The data processor 22 further includes: the determination model generator 26 that generates the determination model for determining whether the shape of the weld 201 is good or bad for each of the material and shape of the workpiece 200 using the plurality of learning data sets; and the first determination unit 27 that determines whether the shape of the weld 201 is good or bad based on the image data read from the image processor 23 and the one or more determination models generated by the determination model generator 26.

With the appearance inspection apparatus 20 configured in this way, a required amount of learning data sets can be generated based on a small amount of image data, and the determination model can be provided with enhanced accuracy. Thus, whether the shape of the weld 201 is good or bad can be accurately determined. Further, it is no longer necessary to acquire a large amount of image data for learning, and the number of man-hours required for determining whether the shape is good or bad can be significantly reduced. The shape defect of the weld 201 can be automatically detected without manually setting a complicated criterion for the determination. Since the image data are classified by material and shape of the workpiece 200 prior to the generation of the learning data sets, the learning data sets can be generated efficiently.

The learning data set generator 25 generates the learning data sets based on one or more feature values extracted from the image data in the image processor 23.

Since the learning data sets are generated using the feature value extracted from the image data, the processing for generating the learning data sets can be simplified without deteriorating the accuracy of the determination model.

The learning data set generator 25 performs the data extension processing by changing the one or more feature values extracted from the image data and/or changing the position of the shape defect in the image data.

Since the learning data sets are generated based on the one or more feature values extracted from the image data, the learning data sets can be generated with improved efficiency, and the number of man-hours can further be reduced. Further, the learning data sets can be efficiently generated through a simple process of changing the feature values and/or the position of the shape defect.

The learning data set generator 25 may classify the multiple pieces of image data generated by the image processor 23 by inspection item for the weld 201, and may perform the data extension processing on the classified image data to generate the plurality of learning data sets.

The determination model generator 26 may generate the determination model for determining whether the shape of the weld 201 is good or bad for each inspection item of the weld 201 using the plurality of learning data sets.

The learning data set generator 25 may classify the multiple pieces of image data generated by the image processor 23 into image data of the particular portion of the weld 201 in which the determination of the shape defect is harder than in the other portion and image data of the other portion, and may separately perform the data extension processing on these image data to generate the plurality of learning data sets.

Alternatively, when generating the determination model for each material and shape of the workpiece 200 using the plurality of learning data sets, the determination model generator 26 may separately generate the determination model corresponding to the particular portion of the weld 201 and the determination model corresponding to the other portion.

This makes it possible to determine the presence or absence and type of the shape defect with accuracy equal to or more than a predetermined level even in the particular portion of the weld 201 in which the determination of the presence or absence and type of the shape defect is harder than in the other portion. As a result, whether the shape of the weld 201 is good or bad can be accurately determined in the appearance inspection.

The appearance inspection apparatus 20 further includes the notification unit 28 that notifies the result of the determination by the first determination unit 27.

This allows the welder or the system administrator to know in real time during the welding of the workpiece 200 whether a failure has occurred at the weld 201 or not. If necessary, measures to continue the welding of the workpiece 200 or not can be taken. This can further reduce the welding cost of the welding process.

The appearance inspection apparatus 20 may further include the first memory 24 that stores the image data generated by the image processor 23. In this case, the learning data set generator 25 reads the image data stored in the first memory 24 to generate the plurality of learning data sets.

In this way, the generation of the learning data sets and the subsequent processing for generating the determination model can be smoothly performed. The first memory 24 may be present outside the data processor 22. For example, the data processor 22 may be provided with an external communication interface to be able to exchange the data with the first memory 24 via the external communication interface. The first memory 24 may be an external server, for example.

A method for improving the accuracy of determination of the presence or absence and type of the shape defect of the weld 201 according to the present embodiment is performed using the appearance inspection apparatus 20, and at least includes the following steps.

The method at least includes: an appearance inspection step (step S1) of inspecting the appearance of the weld 201 of the workpiece 200; a shape defect determination step (step S2) of determining the presence or absence and type of the shape defect of the weld 201 based on the result of the inspection in the appearance inspection step; a visual check step (step S3) of checking the weld 201 with human eyes; and a correctness determination step (step S4) of determining whether the result of the determination in the shape defect determination step is correct or not through comparison between the result of the checking in the visual check step and the result of the determination in the shape defect determination step.

If the result of the determination in the correctness determination step is negative, a series of steps including: an annotation step (step S5) of tagging the presence or absence and type of the shape defect specified in the visual check step on the image data of the weld 201 generated by the image processor 23; a learning data set generating step (step S6) of generating the learning data sets based on the image data of the weld 201 that has gone through the annotation step; and a relearning step (step S7) of allowing the determination model to relearn using the learning data sets generated in the learning data set generating step is performed, and then the shape defect determination step is performed again. The series of steps is repeated until the result of the determination in the correctness determination step becomes positive.

According to this method, the visual check of the weld 201 and annotation by human are additionally performed when it is difficult to determine the presence of absence and type of the shape defect of the weld 201. This can improve the learning efficiency and accuracy of the determination model. Thus, whether the shape of the weld 201 is good or bad can be determined by the first determination unit 27 with enhanced accuracy, and the yield of welding of the workpiece 200 can be properly evaluated.

Further, the determination model that has relearned in the relearning step has a threshold value for determining the presence or absence and type of the shape defect of the weld 201, and the threshold value is changed from that of the determination model before the relearning.

As a result, the effect of the relearning of the determination model can be fixed, and the determination of the shape defect can be stably performed with high accuracy in the subsequent appearance inspection.

The weld 201 may include a particular portion in which the determination of the presence or absence and type of the shape defect is harder than in other portion. In this case, the particular portion of the weld 201 may include the starting end portion and terminal end portion of the weld bead.

In the particular portion of the weld 201, the determination of the presence or absence and type of the shape defect is harder than in other portion. Thus, if the number of learning is small, the learning accuracy of the determination model cannot be improved in some cases. In particular, this tends to occur remarkably at the starting end portion and terminal end portion of the weld bead at which the height from the flat surface of the workpiece 200 sharply changes.

According to the present embodiment, the visual check of the weld 201 and the annotation by human improve the learning efficiency and accuracy of the determination model. Thus, even at the particular portion of the weld 201 including the starting end portion and terminal end portion of the weld bead, whether the shape of the weld 201 is good or bad can be determined with enhanced accuracy.

Examples of the type of the shape defect of the weld 201 at least include a hole 202 which is a through hole formed in the workpiece 200 due to partial melting of the weld 201 off the workpiece 200, and an undercut 203 which is formed at the edge of the weld bead and is dented from the surface of the workpiece 200.

Further, the type of the shape defect at least includes a spatter 204 generated by some of droplets formed at the tip of the welding wire 12 or fine particles of a molten portion of the workpiece 200 scattered and adhered to the weld 201, and slag 207 that is metal dust adhering to the weld 201 in the course of welding of the workpiece 200.

If the workpiece 200 is a galvanized steel plate, the type of the shape defect at least includes a pit 205 that is formed to open in the surface of the weld bead as a result of partial evaporation of the galvanized steel plate at the weld 201.

These shape defects are detected as abnormality involving surface irregularities at the weld 201. As mentioned above, at the starting end portion and terminal end portion of the weld bead where the height from the flat surface of the workpiece 200 sharply changes, it has been difficult to determine whether such shape defect is present or not.

However, according to the present embodiment, the visual check of the weld 201 and the annotation by human make it possible to properly determine the presence or absence and type of the shape defect even at the particular portion of the weld 201 including the starting end portion and terminal end portion of the weld bead. When the relearning is performed based on the determination result, the learning efficiency and accuracy of the determination model are improved. Therefore, even at the weld 201 including the starting end portion and terminal end portion of the weld bead, whether the shape of the weld 201 is good or bad can be determined with enhanced accuracy.

The welding system 100 according to the present embodiment includes the welding apparatus 10 that welds the workpiece 200, and the appearance inspection apparatus 20.

The welding system 100 configured in this manner can inspect the shape of the weld 201 with high accuracy and a small number of man-hours. This can reduce the cost of the welding process.

The welding apparatus 10 at least includes the welding head 11 (welding torch 11) that applies heat to the workpiece 200, the robot arm 16 that holds the welding head 11 (welding torch 11) and moves the welding head 11 (welding torch 11) to a desired position, the output controller 15 that controls the welding output of the welding head 11 (welding torch 11), and the robot controller 17 that controls the operation of the robot arm 16.

If the first determination unit 27 of the appearance inspection apparatus 20 has determined that the shape of the weld 201 is bad, the output controller 15 stops the welding output of the welding head 11 (welding torch 11), and the robot controller 17 stops the operation of the robot arm 16 or operates the robot arm 16 so that the welding head 11 (welding torch 11) moves to a predetermined initial position.

The welding system 100 configured in this manner can stop the next welding if the shape of the weld 201 is bad, and can reduce the frequent occurrence of defective products. Through acquiring the result of the determination for each inspection item by the first determination unit 27, a failed part of the welding system 100 can be estimated, and a cause of the failure can be quickly removed, thereby reducing downtime of the welding system 100.

### (Second Embodiment)

When the weld 201 is found to have a shape defect in the shape inspection of the weld 201 performed by a method as disclosed by Patent Document 1, it has been a welder who determines whether the shape defect can be repaired through rewelding. Further, also when the shape defect is determined to be repairable, it has been the welder who performs the rewelding.

However, the result of the determination of whether the shape defect can be repaired or not by the welder varies depending on the skill of the welder. This results in problems, e.g., a repairable shape defect is falsely determined to be unrepairable and the workpiece 200 is regarded as a defective and disposed, or an unrepairable shape defect is falsely determined to be repairable and the rewelding is uselessly performed.

As the types of the workpiece 200 to be welded diversify, the shape of the weld 201, the shape inspection items, and the determination criteria are getting more complicated. Thus, it is very difficult for the welder to determine whether the shape defect is repairable or not. Further, it is also difficult to determine the conditions for the rewelding of the workpiece 200.

Under these circumstances, the present embodiment discloses a welding system 100 that can accurately and automatically determine whether the shape defect of the weld 201 is repairable or not, and a method for welding the workpiece 200 using the system.

### [Configuration of Appearance Inspection Apparatus]

The welding system of this embodiment is configured in the same manner as the welding system 100 of the first embodiment, but the output controller 15 of the welding apparatus 10 and the data processor 22 of the appearance inspection apparatus 20 are configured differently from those of the first embodiment. Therefore, this embodiment will mainly focus on the configurations of the data processor 22 and the output controller 15.

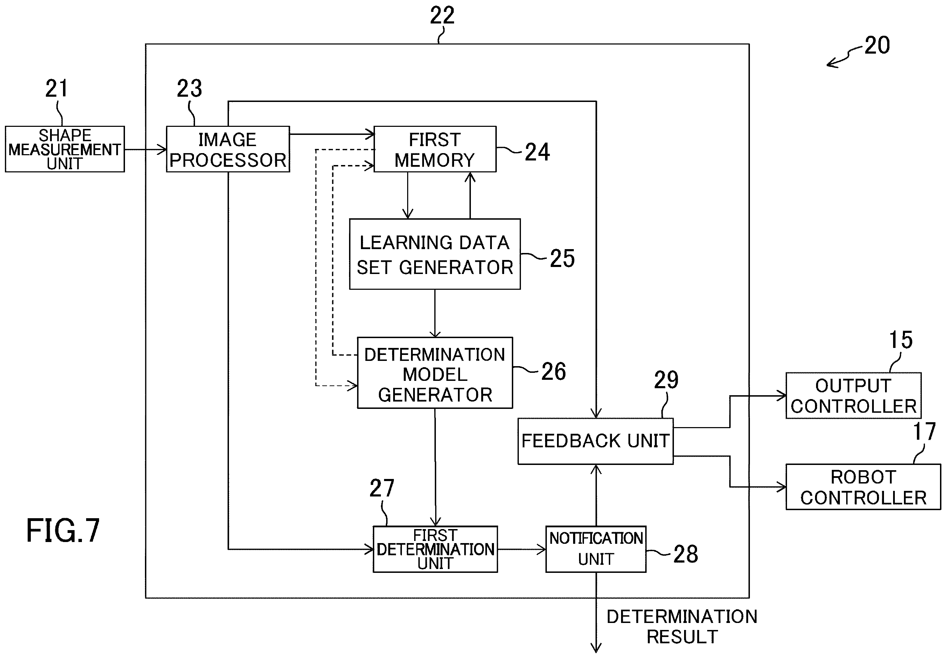

FIG. 7 is a functional block diagram of the appearance inspection apparatus. The shape measurement unit 21 has the same configuration as that shown in FIG. 2, and will not be described below.

The data processor 22 includes an image processor 23, a first memory 24, a learning data set generator 25, a determination model generator 26, a first determination unit 27, a notification unit 28, and a feedback unit 29. The functional blocks of the data processor 22 except for the feedback unit 29 are configured in the same manner as those of the first embodiment, and will not be described in detail below.

The feedback unit 29 is configured to extract information about a defect mode of the weld 201 and a position and size of the shape defect, which will be described later (and may be hereinafter collectively referred to as shape defect information), based on the result of the determination by the first determination unit 27 and the image data read from the image processor 23. Specifically, when the shape of the weld 201 is determined to be bad, the feedback unit 29 is configured to extract the shape defect information based on the image data read from the image processor 23. Further, the feedback unit 29 is configured to output the extracted shape defect information and the result of the determination by the first determination unit 27 to the output controller 15 or robot controller 17 of the welding apparatus 10.

The notification unit 28 is configured to notify the feedback unit 29, a welder, or a system administrator of the result of the determination by the first determination unit 27.

If the result of the determination by the first determination unit 27 is positive, i.e., the shape of the weld 201 is determined to be good, the welding system 100 continuously welds a portion 201 to be welded next of the same workpiece 200, or a similar portion 201 to be welded of a next workpiece 200.

If the result of the determination by the first determination unit 27 is negative, i.e., the shape of the weld 201 is determined to be bad, the output controller 15 stops the welding output of the welding torch 11, and the robot controller 17 stops the operation of the robot arm 16. As will be described later, if the shape defect of the weld 201 is repairable through rewelding, the robot controller 17 operates the robot arm 16 based on the position of the shape defect extracted by the feedback unit 29 so that the welding torch 11 moves to the position.

### [Configuration of Output Controller of Welding Apparatus]

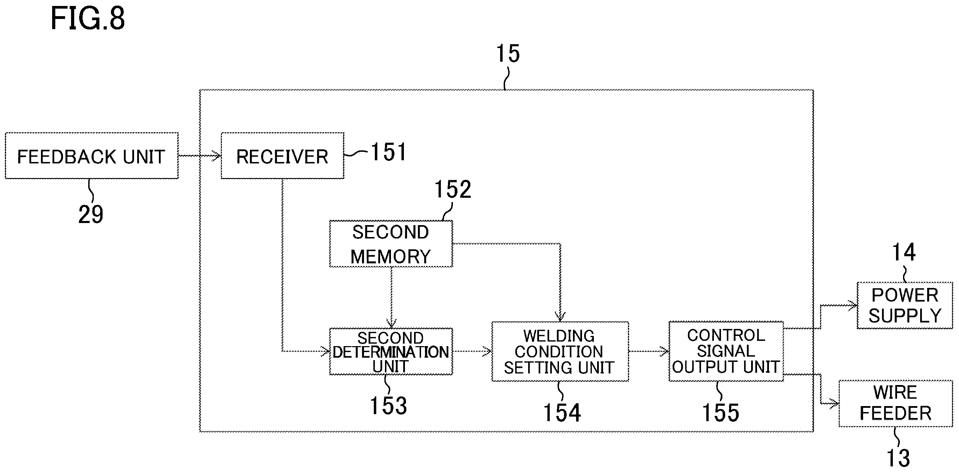

FIG. 8 is a functional block diagram of the output controller of the welding apparatus. The output controller 15 sets the conditions for rewelding the weld 201 based on the result of the extraction by the feedback unit 29 (see FIG. 7) of the appearance inspection apparatus 20.

The output controller 15 includes a plurality of functional blocks, namely, a receiver 151, a second memory 152, a second determination unit 153, a welding condition setting unit 154, and a control signal output unit 155. In general, software implemented on a central processing unit (CPU) or a micro controller unit (MCU) is executed to realize the plurality of functional blocks of the output controller 15.

The receiver 151 receives the result of the determination by the first determination unit 27 and the shape defect information from the feedback unit 29 of the appearance inspection apparatus 20. The feedback unit 29 and the receiver 151 may communicate wirelessly or via wires.

The second memory 152 stores the conditions for welding the workpiece 200 and criterion data for determining whether the shape defect of the weld 201 is repairable or not. The criterion data is mainly set based on the defect mode and size of the weld 201. The second memory 152 stores, in a matrix format, the rewelding conditions that are set in advance in accordance with the material and thickness of the workpiece 200, the defect mode of the weld 201, and the size of the shape defect. The rewelding conditions are experimentally obtained using the workpiece 200 welded under the welding conditions adjusted to cause a predetermined shape defect.

The second memory 152 may be present outside the output controller 15. For example, data may be exchanged between the output controller 15 and the second memory 152 via the receiver 151. The second memory 152 may be an external server, for example. When the second memory 152 is provided inside the output controller 15 and can exchange data with another memory (not shown), the second memory 152 may be configured to temporarily store the above-described welding conditions, rewelding conditions, and criterion data.

The second determination unit 153 determines whether the shape defect of the weld 201 is repairable through the rewelding based on the shape defect information extracted by the feedback unit 29. The criterion data used for determining whether the shape defect is repairable or not is read from the second memory 152 as necessary.

The welding condition setting unit 154 sets a corresponding condition from a plurality of welding conditions stored in the second memory 152 according to the material and shape of the workpiece 200 to be welded. If the result of the determination by the second determination unit 153 is positive, i.e., the shape defect of the weld 201 is determined to be repairable, the welding condition setting unit 154 sets an associated one of the rewelding conditions stored in the second memory 152.

The control signal output unit 155 outputs a control signal to the wire feeder 13 and the power supply 14 to control electric power supplied to the welding wire 12, time of supplying the electric power, and the feeding speed and amount of the welding wire 12. The control signal is generated based on the welding condition set by the welding condition setting unit 154 for normal welding of the workpiece 200, or based on the rewelding condition set by the welding condition setting unit 154 for rewelding of the workpiece 200.

The robot controller 17 controls the operation of the robot arm 16 based on the shape defect information received from the feedback unit 29 and the result of the determination by the second determination unit 153 of the output controller 15 so that the tip of the welding torch 11 moves to a predetermined position where the repairable shape defect of the weld 201 is present.

### [Procedure for Welding Workpiece]

As described in the first embodiment, the shape defect of the weld 201 has various modes, which are roughly divided into those which can be repaired through rewelding and those not. For example, the spatters 204 cannot be removed even if the weld 201 is rewelded, and cannot be repaired. Likewise, the weld 201 whose width extends beyond an allowable range is also unrepairable. On the other hand, rewelding of the weld 201 under appropriate conditions can repair the hole 202 and the undercut 203, and can make up for the shortage of the length and width of the weld 201.

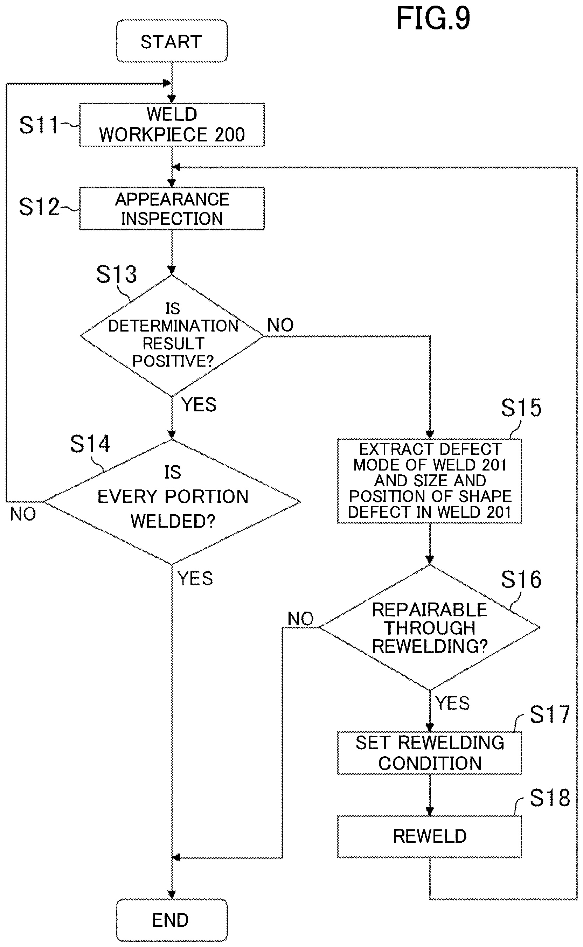

Based on the foregoing, a procedure for welding the workpiece 200 will be described below with reference to FIG. 9.

First, the workpiece 200 is welded under predetermined welding conditions (step S11: welding step), and then the appearance of the weld 201, i.e., the shape of the weld 201, is inspected using the appearance inspection apparatus 20 (step S12: appearance inspection step).

Based on the result of the inspection in step S12, the appearance inspection apparatus 20 determines whether the shape of the weld 201 is good or bad (step S13: shape determination step). If the result of the determination in step S13 is positive, i.e., the shape of the weld 201 is determined to be good, whether every target portion of the workpiece 200 has been welded or not is determined (step S14). If the result of the determination in step S13 is positive, the welding of the workpiece 200 ends. If another workpiece remains to be welded, this workpiece 200 is introduced into the welding system 100 to continue the welding, or the procedure returns to step S11 to weld another portion of the former workpiece 200.

If the result of the determination in step S13 is negative, i.e., the shape of the weld 201 is determined to be bad, the feedback unit 29 extracts the shape defect information, that is, the mode of the shape defect of the weld 201, the size of the shape defect, and the position of the shape defect in the weld 201 (step S15: shape defect information extraction step). Based on the result of the extraction in step S15, the output controller 15 determines whether the shape defect is repairable through the rewelding or not (step S16: reweld/no-reweld determination step).

If the result of the determination in step S16 is positive, i.e., if the shape defect of the weld 201 is determined to be repairable through the rewelding, the output controller 15 sets the rewelding condition (step S17: rewelding condition setting step). Then, the workpiece 200 is rewelded under the rewelding condition (step S18: rewelding step), and the procedure returns to step S12 to inspect the appearance of the weld 201 again. Prior to step S18, the robot controller 17 operates the robot arm 16 based on the position of the shape defect extracted by the feedback unit 29 so that the tip of the welding torch 11 moves to the position.

If the result of the determination in step S16 is negative, i.e., the shape defect of the weld 201 is determined to be unrepairable through the rewelding, the welding system 100 interrupts the welding of the workpiece 200, and removes the workpiece 200 from the welding system 100.

### [Advantages]

As described above, the welding system 100 of the present embodiment includes the welding apparatus 10 that welds the workpiece 200, and the appearance inspection apparatus 20 that inspects the appearance of the weld 201 of the workpiece 200.

The appearance inspection apparatus 20 at least includes: the shape measurement unit 21 that measures the shape of the weld 201; the image processor 23 that generates image data of the weld 201 based on the data of the shape measured by the shape measurement unit 21; the first determination unit 27 that determines whether the shape of the weld 201 is good or bad based on the image data read from the image processor 23; and the feedback unit 29 that extracts the shape defect information including the defect mode of the weld 201 and the size and position of the shape defect in the weld 201 based on the result of the determination by the first determination unit 27 and the image data read from the image processor 23.

The welding apparatus 10 at least includes the welding head 11 (welding torch 11) that applies heat to the workpiece 200, and the output controller 15 that controls the welding output of the welding head 11 (welding torch 11).

If the first determination unit 27 has determined that the shape of the weld 201 is bad, the output controller 15 determines whether the shape defect is repairable through the rewelding or not based on the shape defect information extracted by the feedback unit 29, and sets the rewelding condition if the shape defect is repairable.

The welding system 100 configured in this manner can automatically determine whether the shape defect of the weld 201 is repairable or not based on the result of the inspection by the appearance inspection apparatus 20. Since the shape defect information, i.e., the defect mode of the weld 201 and the position and size of the shape defect, is extracted based on the data of the shape measured by the shape measurement unit 21, the extraction of the shape defect information can be more accurate than that by the welder himself/herself, for example. The output controller 15 determines whether the shape defect is repairable or not based on the shape defect information. Thus, whether the shape defect is repairable or not can be determined with high accuracy. Further, the output controller 15 sets the rewelding condition based on the shape defect information extracted by the feedback unit 29. This can improve the accuracy in setting the condition, and can improve the repairability of the shape defect. This can improve a final yield of the welding process, and can reduce the cost of the welding process.

The welding apparatus 10 further includes the robot arm 16 that holds the welding head 11 (welding torch 11) and moves the welding head 11 (welding torch 11) to a desired position, and the robot controller 17 that controls the operation of the robot arm 16.

If the first determination unit 27 has determined that the shape of the weld 201 is bad, the robot controller 17 operates the robot arm 16 based on the position of the shape defect extracted by the feedback unit 29 so that the welding head 11 (welding torch 11) moves to the position.

The welding apparatus 10 configured in this manner enables automatic welding and rewelding of the workpiece 200. At the time of rewelding, complicated positional adjustment of the welding head 11 (welding torch 11) is no longer necessary, which can simplify the rewelding process.

The method for welding the workpiece 200 according to the present embodiment using the above-described welding system 100 includes: a welding step (step S11) of welding a predetermined portion of the workpiece 200 using the welding apparatus 10; a shape determination step (step S13) of determining whether the shape of the weld 201 of the workpiece 200 is good or bad using the appearance inspection apparatus 20 after the end of the welding step; and a reweld/no-reweld determination step (step S16) of determining whether the shape defect of the weld 201 is repairable through rewelding or not based on the result of the determination in the shape determination step.

If the result of the determination in the shape determination step is positive, welding of another portion of the workpiece 200 starts, or welding of a next workpiece 200 starts.

If the result of the determination in the shape determination step is negative, the reweld/no-reweld determination step is performed. If the determination result is positive, the shape defect of the weld 201 is rewelded under the rewelding condition set by the output controller 15.

According to the present embodiment, whether the shape of the weld 201 is good or bad and whether the shape defect is repairable through rewelding or not are determined. Based on the results of the determinations and the rewelding condition set by the output controller 15, the shape defect of the weld 201 is rewelded. This can reduce poor welding of the workpiece 200, and can improve the weld quality.

If the result of the determination in the reweld/no-reweld determination step is negative, welding of the workpiece 200 may be interrupted.

This makes it possible to quickly remove the workpiece 200 which is determined to be a defective from the welding system 100, and shorten time required for the welding process.

### (Third Embodiment)

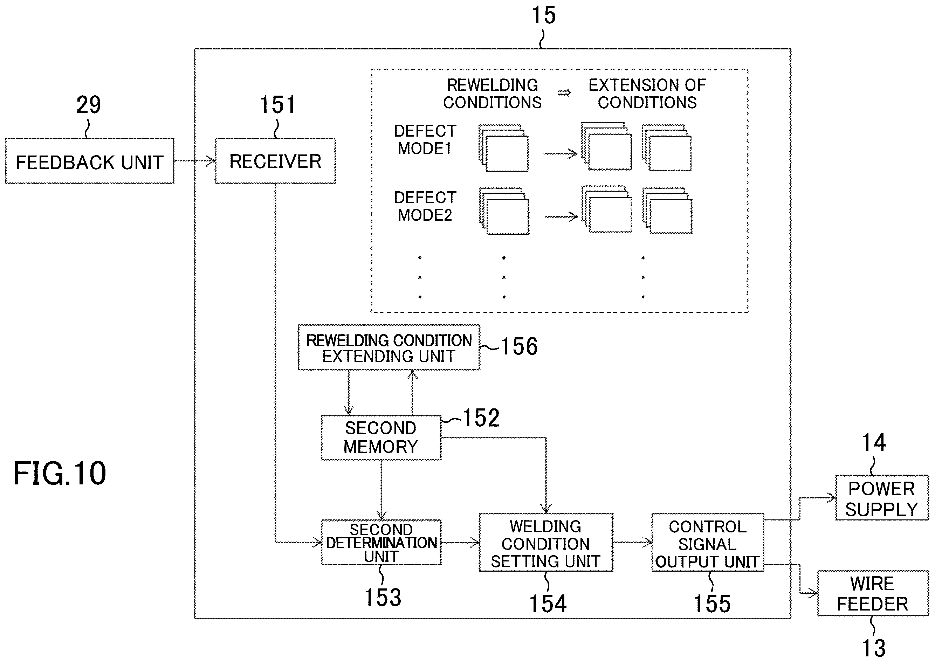

FIG. 10 is a functional block diagram of an output controller of a welding apparatus according to the present embodiment.

The output controller 15 of the present embodiment shown in FIG. 10 is configured differently from that of the second embodiment shown in FIG. 8 in that the output controller 15 has a rewelding condition extending unit 156. The second memory 152 and the rewelding condition extending unit 156 are configured to be able to mutually exchange data.

The rewelding condition extending unit 156 reads the rewelding condition stored in the second memory 152, performs data extension processing in accordance with a predetermined extended model, and stores the extended rewelding condition in the second memory 152. Further, the welding condition setting unit 154 sets, among the extended rewelding conditions stored in the second memory 152, one that corresponds to the shape of the workpiece 200 including its material and thickness, the defect mode of the weld 201, and the size of the shape defect.

For the data extension of the rewelding condition, the extended model based on the original welding condition for the workpiece 200 is provided for the rewelding condition extending unit 156. This extended model is configured to be reinforced through learning by receiving the feedback of the result of the appearance inspection of the weld 201 which has been actually rewelded, so that the accuracy of the extended rewelding condition improves.

According to the present embodiment, when the amount of data of the rewelding condition previously acquired is small and the range of the condition is small, the range is appropriately extended so that the weld 201 having various defect modes can be repaired with reliability.

Suppose that the rewelding condition stored in the second memory 152 is, for example, a condition which has been set for the weld 201, of the workpiece 200 of a predetermined material, having a predetermined defect mode, but is associated with only a single shape of the weld 201 and a single size of the shape defect. In this case, the rewelding condition extending unit 156 reads the rewelding condition from the second memory 152, and newly generate a rewelding condition in which the shape of the weld 201 and the size of the shape defect are changed. Further, the rewelding condition extending unit 156 newly generate a rewelding condition in which the shape of the weld 201 and the size of the shape defect are changed depending on the material of the workpiece 200 and the defect mode of the weld 201. In this way, the rewelding condition stored in the second memory 152 is extended, and the extended rewelding conditions are stored in the second memory 152.

In this configuration, the rewelding condition can be suitably set with a small amount of data. Further, the repairability of the weld 201 is improved, which can improve the final yield of the welding process.

### (Other Embodiments)

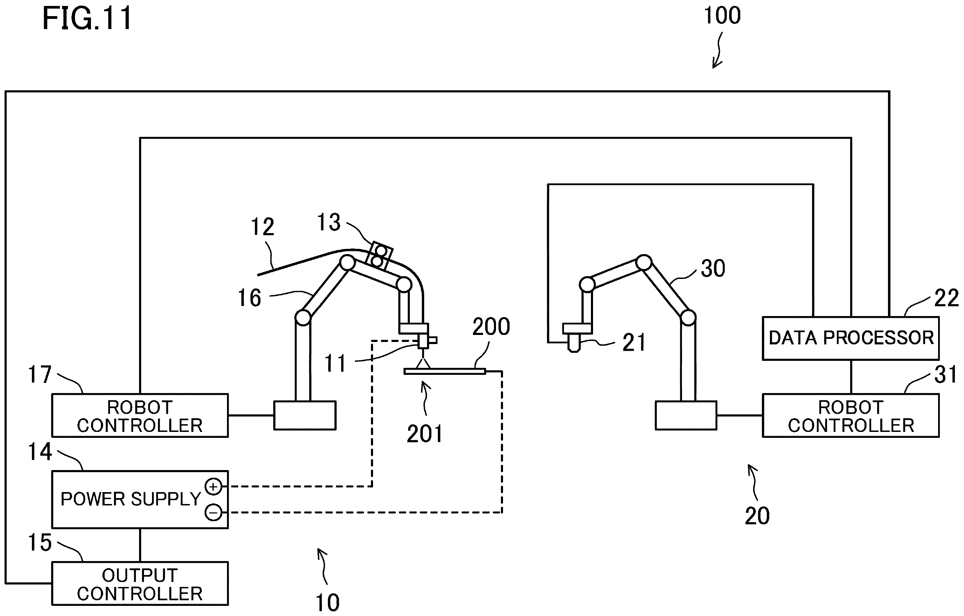

It has been described in the first to third embodiments that the shape measurement unit 21 is attached to the welding torch 11 or the robot arm 16. However, the welding system 100 may be provided with an additional robot arm 30 that holds the shape measurement unit 21 and moves the shape measurement unit 21 to a desired position as illustrated in FIG. 11. Thus, the welding process and the inspection process can be separately performed, which can shorten the whole process time. FIG. 11 illustrates an example in which the robot controller 17 controls the operation of the robot arm 16, and the robot controller 31 controls the operation of the robot arm 30. However, the present disclosure is not particularly limited to this example, and the robot controller 17 may control the operation of each of the robot arms 16, 30, for example.

It has been described that the data extension processing is executed on the sample learning data and/or the acquired image data to generate the learning data sets. However, if a sufficient amount of image data for the determination of the shape quality has been acquired in advance, the determination of the shape quality may be made using the image data generated by the image processor 23 and stored in the first memory 24 as they are without executing the data extension processing. As long as the required amount of learning data for improving the accuracy of the determination model is acquired, the data extension processing does not need to be performed on all the image data read from the first memory 24, and may be performed on some required data only.

As described above, the determination model is represented as a combination of a plurality of discriminators. Therefore, as indicated by broken arrows in FIG. 2, the determination model that has been generated by the determination model generator 26 and completed predetermined learning, that is, the configuration of each discriminator and patterns of combination of the discriminators, may be stored in the first memory 24. In this case, the determination model generator 26 may read information about the configuration of the determination model corresponding to the material and shape of the workpiece 200 from the first memory 24, and may reconstruct the determination model. This makes it possible to easily cope with the case where the number of determination models to be used increases with an increase in type of the material and shape of the workpiece 200 and an increase in number of the inspection items.

It has been described in the second and third embodiments that the feedback unit 29 is provided for the data processor 22 of the appearance inspection apparatus 20. However, the feedback unit 29 may be provided for the output controller 15. In this case, the result of the determination by the first determination unit 27 may be received by the receiver 151 of the output controller 15 via the notification unit 28.

FIG. 8 shows an example in which the image data is directly transmitted from the image processor 23 to the feedback unit 29. However, the flow of data has been merely described as an example for convenience of explanation, and is not particularly limited thereto. For example, the image data may be directly transmitted from the first determination unit 27 to the feedback unit 29. The result of the determination by the first determination unit 27 may be directly transmitted to the feedback unit 29.

Further, the appearance inspection apparatus 20 of the second and third embodiments may have no determination model generator 26. Instead, the first memory 24 may store the criterion set for each inspection item for the weld 201, and the first determination unit 27 may determine whether the shape of the weld 201 is good or bad based on the shape defect information and the criterion stored in the first memory 24. Even in this case, a predetermined determination accuracy is ensured if the number of inspection items is small and the criterion is moderate.

### INDUSTRIAL APPLICABILITY

The appearance inspection apparatus of the present invention can accurately inspect the shape of a weld with a small number of data, and is advantageous for use in a welding system.

### DESCRIPTION OF REFERENCE CHARACTERS

- 10: Welding Apparatus
- 11: Welding Head (Welding Torch)
- 12: Welding Wire
- 13: Wire Feeder
- 14: Power Supply
- 15: Output Controller
- 16: Robot Arm
- 17: Robot Controller
- 20: Appearance Inspection Apparatus
- 21: Shape Measurement Unit
- 22: Data Processor
- 23: Image Processor
- 24: First Memory
- 25: Learning Data Set Generator
- 26: Determination Model Generator
- 27: First Determination Unit
- 28: Notification Unit
- 29: Feedback Unit
- 30: Robot Arm
- 31: Robot Controller
- 100: Welding System
- 151: Receiver
- 152: Second Memory
- 153: Second Determination Unit
- 154: Welding Condition Setting Unit
- 155: Control Signal Output Unit
- 156: Rewelding Condition Extending Unit
- 200: Workpiece
- 201: Weld

## Claims

1. An appearance inspection apparatus for inspecting an appearance of a weld of a workpiece, the appearance inspection apparatus comprising:
a shape measurement unit that measures a shape of the weld;
an image processor that generates image data of the weld based on data of the shape measured by the shape measurement unit;
a learning data set generator that classifies the multiple pieces of image data generated by the image processor by material and shape of the workpiece, and performs data extension processing on the classified the image data to generate a plurality of learning data sets;
a determination model generator that generates a determination model for determining whether the shape of the weld is good or bad for each of the material and shape of the workpiece using the plurality of learning data sets; and
a first determination unit that determines whether the shape of the weld is good or bad based on the image data read from the image processor and the one or more determination models generated by the determination model generator.

2. The appearance inspection apparatus of claim 1, wherein
the learning data set generator generates the learning data sets based on one or more feature values extracted from the image data in the image processor.

3. The appearance inspection apparatus of claim 2, wherein
the learning data set generator performs the data extension processing by changing the one or more feature values extracted from the image data and/or changing a position of a shape defect in the image data.

4. The appearance inspection apparatus of any one of claims 1 to 3, further comprising
a first memory that stores the image data generated by the image processor, wherein
the learning data set generator reads the multiple pieces of image data stored in the first memory to generate the plurality of learning data sets.

5. The appearance inspection apparatus of any one of claims 1 to 4, further comprising
a notification unit that notifies a result of the determination by the first determination unit.

6. A method for improving accuracy of determination of presence or absence and type of a shape defect of a weld using the appearance inspection apparatus of any one of claims 1 to 5, the method at least comprising:
an appearance inspection step of inspecting the appearance of the weld of the workpiece;
a shape defect determination step of determining the presence or absence and type of the shape defect of the weld based on a result of the inspection in the appearance inspection step;
a visual check step of checking the weld with human eyes; and
a correctness determination step of determining whether a result of the determination in the shape defect determination step is correct or not through comparison between the result of the checking in the visual check step and the result of the determination in the shape defect determination step, wherein
if the result of the determination in the correctness determination step is negative, a series of steps including:
an annotation step of tagging the presence or absence and type of the shape defect specified in the visual check step on the image data of the weld;
a learning data set generating step of generating the learning data sets based on the image data of the weld that has gone through the annotation step; and
a relearning step of allowing the determination model to relearn using the learning data sets generated in the learning data set generating step is performed, and then the shape defect determination step is performed again, and
the series of steps is repeated until the result of the determination in the correctness determination step becomes positive.

7. The method of claim 6 for improving the accuracy of determination of the presence or absence and type of the shape defect of the weld, wherein
the determination model that has relearned in the relearning step has a threshold value for determining the presence or absence and type of the shape defect of the weld, the threshold value being changed from a threshold value of the determination model before the relearning.

8. The method of claim 6 or 7 for improving the accuracy of determination of the presence or absence and type of the shape defect of the weld, wherein
the weld includes a particular portion in which the determination of the presence or absence and type of the shape defect is harder than in other portion, and
the particular portion includes a starting end portion and/or terminal end portion of a weld bead.

9. The method of claim 8 for improving the accuracy of determination of the presence or absence and type of the shape defect of the weld, wherein
the type of the shape defect of the weld includes at least one of a hole, an undercut, a spatter and a slag, wherein
the hole that is a through hole formed in the workpiece due to partial melting of the weld off the workpiece,
the undercut is formed at an edge of the weld bead and is dented from a surface of the workpiece,
the spatter is generated by some of droplets formed at a tip of a welding wire or fine particles of a molten portion of the workpiece scattered and adhered to the weld,
the slag is metal dust adhering to the weld in the course of welding of the workpiece, and
if the workpiece is a galvanized steel plate, a pit that is formed to open in a surface of the weld bead as a result of partial evaporation of the galvanized steel plate at the weld.

10. A welding system comprising: a welding apparatus that welds a workpiece; and the appearance inspection apparatus of any one of claims 1 to 5, wherein
the welding apparatus at least includes:
a welding head that applies heat to the workpiece; and
an output controller that controls a welding output of the welding head.

11. The welding system of claim 10, wherein
the welding apparatus further includes:
a robot arm that holds the welding head and moves the welding head to a desired position; and
a robot controller that controls an operation of the robot arm, and
if the first determination unit has determined that the shape of the weld is bad, the output controller stops the welding output of the welding head, and the robot controller stops the operation of the robot arm or operates the robot arm so that the welding head moves to a predetermined initial position.

12. The welding system of claim 10 or 11, wherein
the appearance inspection apparatus further includes
a feedback unit that extracts shape defect information including a defect mode of the weld and a size and position of the shape defect in the weld based on the result of the determination by the first determination unit and the image data read from the image processor, and
if the first determination unit has determined that the shape of the weld is bad, the output controller determines whether the shape defect is repairable through rewelding or not based on the shape defect information extracted by the feedback unit, and sets a rewelding condition if the shape defect is repairable.

13. The welding system of claim 12, wherein
the output controller at least includes:
a second memory that stores previously acquired rewelding conditions; and
a rewelding condition extending unit that extends the rewelding conditions stored in the second memory in accordance with the defect mode of the weld and the material of the workpiece, and stores the extended rewelding conditions in the second memory, and
if the shape defect is repairable, the output controller sets a rewelding condition to be actually used among the extended welding conditions.

14. The welding system of claim 12 or 13, wherein
the welding apparatus further includes:
a robot arm that holds the welding head and moves the welding head to a desired position; and
a robot controller that controls an operation of the robot arm, and
if the first determination unit has determined that the shape of the weld is bad and the output controller has determined that the shape defect is repairable through rewelding, the robot controller operates the robot arm based on the position of the shape defect so that the welding head moves to the position.

15. A method for welding a workpiece using the welding system of any one of claims 12 to 14, the method comprising:
a welding step of welding a predetermined portion of the workpiece using the welding apparatus;
a shape determination step of determining whether a shape of a weld of the workpiece is good or bad using the appearance inspection apparatus after the end of the welding step; and
a reweld/no-reweld determination step of determining whether the shape defect of the weld is repairable through rewelding or not based on a result of the determination in the shape determination step, wherein
if the result of the determination in the shape determination step is positive, welding of another portion of the workpiece starts, or welding of a next workpiece starts,
if the result of the determination in the shape determination step is negative, the reweld/no-reweld determination step is performed, and
if the result of the determination in the reweld/no-reweld determination step is positive, the shape defect is rewelded according to the rewelding condition set by the output controller.

16. The method for welding the workpiece of claim 15, wherein
if the result of the determination in the reweld/no-reweld determination step is negative, the welding of the workpiece is interrupted.
